# EUROPEAN PATENT APPLICATION

(11) **EP 0 987 130 A2**
(43) Date of publication of application: **22.03.2000**
(21) Application number: 99202788.8
(22) Date of filing: 27.08.1999
(51) Int. Cl.: B60C 25/13

(54) **Device for tyre removal machines**

(30) Priority: 14.09.1998 IT RE980044
(71) Applicant: Societa'Italiana Costruzioni Elettromeccaniche-S.I.C.E-S.P.A., 42015 Correggio (Reggio Emilia) (IT)
(72) Inventor: Ferretti, Emilio, Soc. Italiana Costruzioni Elett., 42015 Correggio (Reggio Emilia) (IT)
(74) Representative: Corradini, Corrado

(57) **Abstract**

Auxiliary device for tyre removal machines, to enable them to correctly operate on wheels of special type having their wheel rim (19) and tyre (20) of asymmetric shape, comprises a wheel rim support and locking member (18) to be fixed to the tyre removal machine self-centering unit (2) of vertical axis (3), and comprising a central vertical support shaft rising from a wide connection base, and a thrust member (13) slidable in level, which can assume an inactive configuration in which it lies to the side of said self-centering unit, and an active configuration in which it lies above said unit to occupy a raised working position in which it can act against the underlying upper sidewall of the tyre, and a lowered working position in which it can act against the overlying lower sidewall of the same tyre.

## Description

This invention relates to a device to be associated with a usual tyre removal machine to enable it to correctly operate on all types of currently available tyres and wheel rims.

In particular, the invention concerns the so-called special tyres of the latest generation, ie those tyres which ensure that the vehicle can travel, obviously at low speed, even when the inflation pressure is very low, or even zero as in the case of a perforation or tear.

In addition to the outer carcass, some of said special tyres, to which the invention particularly relates, also comprise a separate toroidal elastomer ring to be housed in the tyre interior, where it engages a respective seat provided in the wheel rim channel.

To enable said tyre and internal ring to be mounted on and removed from the wheel rim, said tyre and wheel rim are given special profiles.

Specifically, the two tyre beads have different diameters, the wheel rim correspondingly having two opposing seats for receiving said different-diameter beads, which they match.

Such special tyres are illustrated and described on French Patent Applications FR92/15061 and FR93/14702, to which reference should be made for further details.

To mount and remove said special tyres on and from the respective wheel rim, a special procedure must be followed in accordance with the instructions of the tyre manufacturer, this procedure being unable to be followed with traditional tyre removal machines.

This is because of the asymmetry of the tyre beads and the need to insert and withdraw the toroidal ring, which prevents any operation being performed on the tyre interior.

In particular, said procedure requires the tyre mounting and removal tool or implement to operate on both the tyre sidewalls.

Consequently in this specific sector there is a deeply felt need for means which enable such special tyres to be correctly mounted and removed.

The main object of the invention is to satisfy said requirement within the context of a simple, rational and reliable construction.

A further object is to provide means able to mount and remove said special tyres in accordance with the method indicated by their manufacturer.

A further object is to provide means by which said special tyres can be mounted and removed while limiting to a minimum the number of times the wheel (tyre + rim) has to be lifted and overturned by the operator.

Said objects are attained by a device having the characteristics defined in the claims.

Specifically, it comprises a wheel rim support and locking member to be fixed to a tyre removal machine self-centering unit of vertical axis, and comprising a central vertical support shaft rising from a wide connection base, and a thrust member slidable in level, which can assume an inactive configuration in which it lies to the side of said self-centering unit, and an active configuration in which it lies above said unit to occupy a raised working position in which it can act against the underlying upper sidewall of the tyre, and a lowered working position in which it can act against the overlying lower sidewall of the same tyre.

The constructional characteristics and merits of the invention, together with its operation, will be apparent from the detailed description given hereinafter with reference to the figures of the accompanying drawings, on which:
Figure 1 is a schematic partial side elevation, shown partly sectioned and with interruptions, illustrating the invention associated with a traditional tyre removal machine.
Figure 2 is a view of the preceding figure from above.
Figure 3 is a view on an enlarged scale showing a part of the invention in a first working configuration.
Figure 4 is a view similar to the preceding showing said part of the invention in another working configuration.

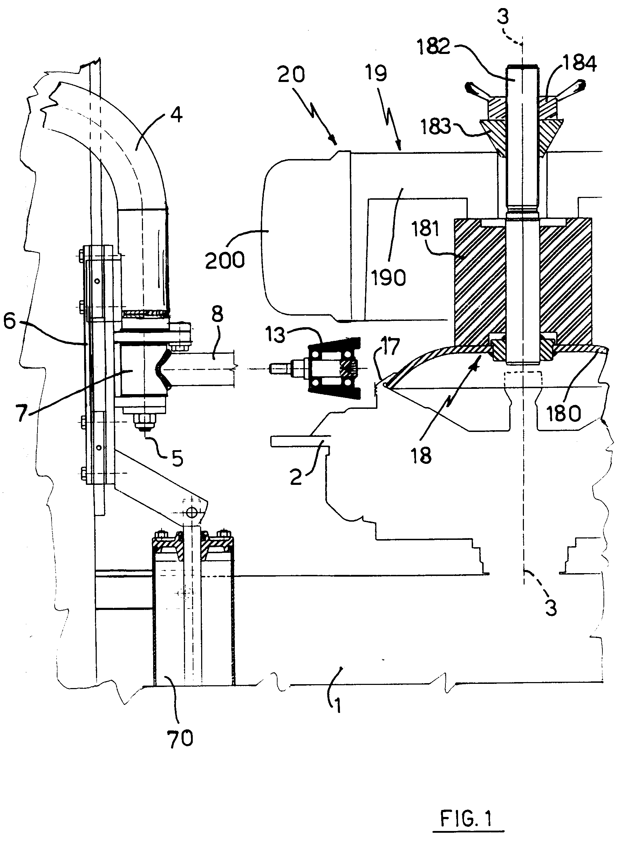

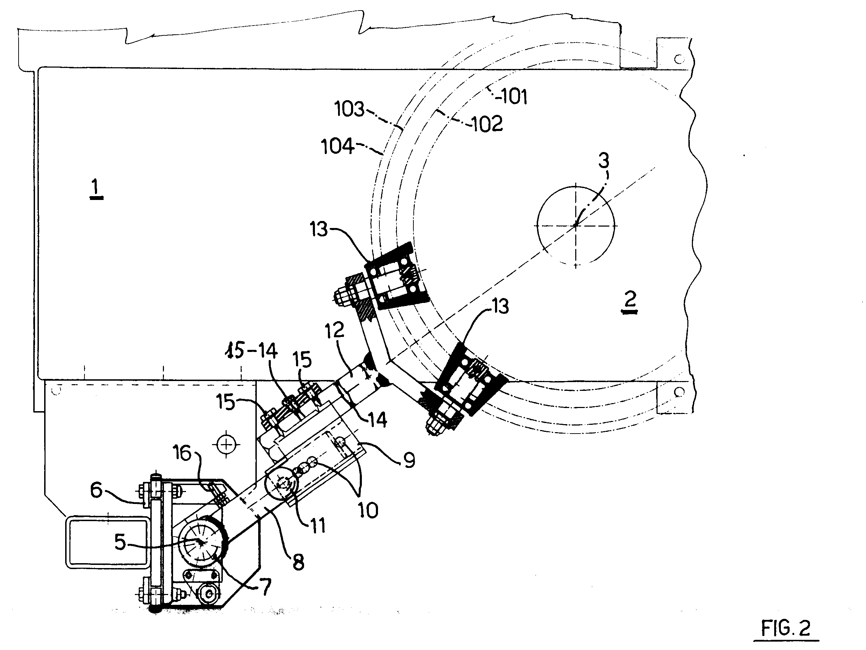

Said figures, and in particular Figures 1 and 2, show a usual tyre removal machine, indicated overall by the reference numeral 1, provided upperly with a likewise usual self-centering unit 2 of vertical axis 3.

For example, said tyre removal machine1 can be of the type illustrated and described in European Patent 0659597 and in Italian Utility Model Application RE95U000023, both in the name of the present applicant, and to which reference should be made for further details.

For the purposes of the present invention, it is sufficient to note that the tyre removal machines of said documents comprise a horizontal tool-carrying arm supported by a movable member which can slide in level and is rotatable in a horizontal plane.

In Figure 1 said arm, indicated by 4, is shown only partly for reasons of simplicity and clarity.

As can be seen, the vertical pin 5 on which the arm 4 is supported and rotates is positioned on a vertical slide 6 the upward and downward movement of which is controlled by a double-acting cylinder-piston unit 70 lowerly hinged to the side of the frame of the tyre removal machine1.

On the same pin 5 there is mounted, rotatable but axially immovable, a bush 7 from which there branches a radial bar 8 on which a block 9 is slidingly mounted.

Both the bar 8 and the block 9 are provided with respective transverse holes 10 alignable in pairs to receive a catch 11 (see Figure 2) which locks them together.

On said block 9 there is mounted, slidable in a direction parallel to said bar 8, a flat profiled body shaped as a Y when viewed in plan.

The leg of said Y is of polygonal cross-section and comprises a series of external grooves 14 with which there cooperate three positioning pawls 15 associated with the block 9, the arms of the Y being flat and each supporting an idle roller 13 of horizontal axis.

The rollers 13 are of frusto-conical shape, are constructed of a relatively rigid material such as plastic, have their minor base facing the bush 7, and have their longitudinal axes converging to cross at a point which faces the vertical axis 3 of the tyre removal machine 1 when said rollers 13 are in their working configuration, as shown in Figure 2.

Said working configuration is determined by a locator 16 positioned on the slide 6, as shown in Figure 2.

According to the invention, the rollers 13 form a thrust member arranged to operate in combination with a member 18 for supporting and locking a wheel (tyre + rim) of special type as defined in the introduction, which is to be locked by the jaws 17 of the self-centering unit 2.

It should be noted that said holes 9 and said catch 11 are provided for selecting the operating position of the rollers 13 on the basis of the nominal diameter 101, 102, 103, 104 etc. of the rim 19 of that wheel currently mounted on the self-centering unit 2, said grooves 14 and said pawls 15 being provided for adjusting said operating position on the basis of the different outer diameters which characterise the wheel rims of said special tyres.

As can be seen in Figure 1, said support and locking member 18 is monolithic and comprises:
- a lower convex discoidal plate 180 to be locked between the jaws 17,
- an intermediate cylindrical body 181 against which the hub 190 of a special wheel rim 19 is to rest, and is constructed of a relatively rigid material such as plastic, and
- an upper threaded pin 182 with which there are associated a centering cone 183 and a locking nut 184.

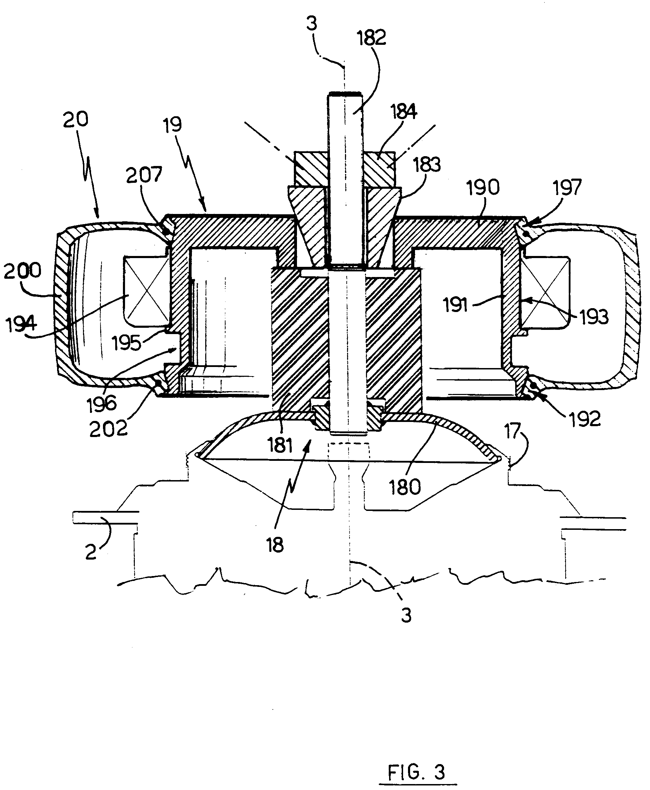

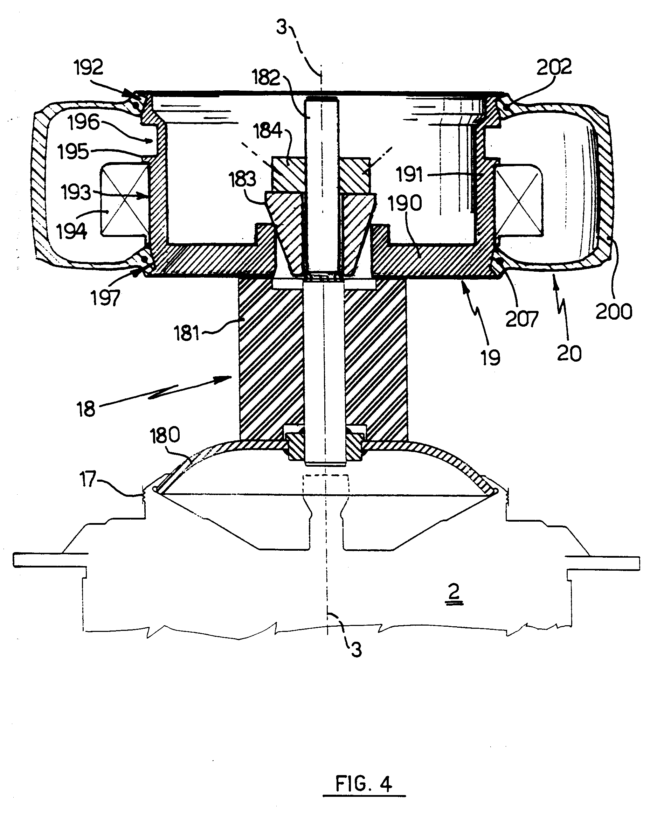

From Figures 3 and 4 it can be seen that said special wheel rim 19, known per se, comprises:
- said hub 190,
- an outer cylindrical wall 191,
- a first circumferential bead seat 192 provided along that edge of the wall 191 which is to face the longitudinal axis of the vehicle,
- a circumferential channel 196,
- an intermediate cylindrical seat 193 to receive a usual elastomer ring 194 for supporting the tyre 20, the cylindrical seat 193 being provided with a counteracting shoulder 195 close to said channel 196, and
- a second circumferential bead seat 197 provided along that edge of the wall 191 which is to face away from the vehicle.

From the same figures it can be seen that the special tyre 20, known per se, comprises:
- a carcass 200,
- the said support ring 194,
- a first bead 202 to mate with said inner circumferential seat 192, and
- a second bead 207 to mate with said outer circumferential seat 197.

Said seats 192, 193 and 197 of the wheel rim 19 have diameters which decrease in that order, the diameters of the inner bead 202, the ring 194 and the outer bead 207 decreasing correspondingly.

To remove the tyre 20 (including the ring 194) from the wheel rim 19, the wheel is arranged as shown in Figure 3, ie with its inner sidewall facing the self-centering unit 2.

With the rollers 13 firstly resting on the upper sidewall of the tyre 20, the bead 207 is slightly lowered while simultaneously rotating the wheel in order to create a slight gap between the bead 207 and its seat 197. At least one usual bead-lifting lever is then inserted into the small gap thus created, and is rotated downwards until the bead 207 escapes from the seat 197. The rollers 13 are then positioned below the lower bead 202 of the wheel in line with the circumferential edge of the respective seat 192. The rollers are finally raised with simultaneous rotation of the wheel, until the ring 194 and the tyre 20 are completely removed from the wheel rim 19.

To mount the tyre 20 (complete with ring 194) the wheel rim is arranged in the removal position shown in Figure 3, following which the procedure is as follows.

Firstly, the tyre 20 is mounted as completely as possible on the wheel rim 19 by hand, after which the rollers 13 are aligned with the underlying upper sidewall of the tyre 20, and are lowered until the ring 194 abuts against the rim 195, by which the lower bead 202 also becomes inserted into the channel 196 of the wheel rim 19. The rollers 13 are then raised and are then positioned above the underlying outer edge of the wheel rim 19, after which they are lowered until they make contact with said edge. When contact is achieved, the unit 2 is rotated so that the upper bead 207 becomes correctly housed in its seat 197. After this the rollers 13 are withdrawn, the wheel is released and turned over, then again locked on the member 18. Then with a usual bead-lifting lever the bead 202 is extracted from the channel 196 and positioned on the outside of the inner edge of the wheel rim 13. Finally, after properly positioning the rollers 13, they are used to correctly insert the bead 202 into its seat 192 while simultaneously rotating the wheel.

## Claims

1. An auxiliary device for tyre removal machines, such as the tyre removal machine equipped in accordance with European Patent 0659576, to enable them to correctly operate on wheels of special type having their wheel rim (19) and tyre (20) of asymmetric shape, characterised by comprising a wheel rim support and locking member (18) to be fixed to the tyre removal machine self-centering unit (2) of vertical axis (3), and comprising a central vertical support shaft rising from a wide connection base, and a thrust member (13) slidable in level, which can assume an inactive configuration in which it lies to the side of said self-centering unit, and an active configuration in which it lies above said unit to occupy a raised working position in which it can act against the underlying upper sidewall of the tyre, and a lowered working position in which it can act against the overlying lower sidewall of the same tyre.

2. A device as claimed in claim 1, characterised in that said wheel rim support and locking member (18) consists of a monolithic element comprising a discoidal base (180) to be clamped onto the self-centering unit (2) of the tyre removal machine (1), an overlying coaxial cylindrical body (181) acting as a support for the hub (190) of said wheel rim, and a terminal threaded coaxial pin (182) with which there are associated a centering cone (183) and a locking nut (184).

3. A device as claimed in claim 1, characterised in that said thrust member (13) comprises at least one idle frusto-conical roller of horizontal axis which is supported by an arm of adjustable length, said arm being hinged on a vertical axis to a movable member slidable in level, such that when in said working positions said at least one roller has its major base facing said vertical axis (3), and its longitudinal axis in a position substantially radial to the self-centering unit.

4. A device as claimed in claim 3, characterised in that said variable-length arm comprises three mutually slidable parallel elements, of which that pair situated at the hinged end of the arm forms a first telescopic unit for selecting the length of the arm in accordance with the nominal diameter (101, 102, ...) of said wheel rim (19) of asymmetric shape, that pair situated at the opposite end forming a second telescopic unit for adjusting the length of said arm in accordance with the different outer diameters of said wheel rim (19) of asymmetric shape, respective locking and release means (11; 15) being associated with said first and second telescopic unit.

5. A device as claimed in claim 4, characterised in that the locking means associated with the first telescopic unit comprise two sets of holes located in the respective constituent elements of the unit and provided with a catch, the locking means associated with the second telescopic unit comprising a series of grooves provided on the outside of the inner element of the respective unit, and at least one pawl associated with the outer element of this latter.

6. A tyre removal machine for mounting and removing tyres on and from wheel rims of any known type, characterised by being equipped with a device claimed in claims 1 to 5.
